# EUROPEAN PATENT SPECIFICATION

(11) **EP 1 478 163 B1**
(45) Date of publication and mention of the grant of the patent: **18.07.2012**
(21) Application number: 04007561.6
(22) Date of filing: 29.03.2004
(51) Int. Cl.: H04M 1/725

(54) **Broadcast message service method in mobile communication terminal**
Verfahren für einen Rundfunknachrichtendienst in einem Mobilkommunikationsendgerät
Procédé pour un service de diffusion de message dans un terminal de communication mobile

(30) Priority: 15.05.2003 KR 2003030981
(43) Date of publication of application: 17.11.2004
(73) Proprietor: LG ELECTRONICS INC., Yeongdeungpo-gu Seoul 150-721 (KR)
(72) Inventor: Kim, Do Hoon, Eunpyeong-Gu, Seoul (KR)
(74) Representative: Katérle, Axel

(56) References cited:
- WO-A2-01/49050
- US-A1- 2002 143 995

## Description

### BACKGROUND OF THE INVENTION

### 1. Field of the Invention

The present invention relates to a short message service in a mobile communication terminal, and more particularly, to a broadcast message service method in a mobile communication terminal for supporting a broadcast transmission service.

### 2. Description of the Related Art

As a mobile communication terminal fast spreads, the population using a short message service (SMS) is rapidly increasing. The short message can be transmitted to an opposition party's mobile communication terminal almost simultaneously with a transmission timing, thereby being recognized as an important communication means with a voice communication service using a mobile communication terminal.

The short message service refers to an interactive service capable of transmitting and receiving a short text message regardless of a calling between mobile communication terminals. That is, the short message service enables a mobile communication service subscriber to receive a message through a public switched telephone network(PSTN), a data communication network, or an Internet when another mobile communication service subscriber or himself transmits a short message of approximately 80 bytes.

Generally, the short message service is performed between one call originator and one call receiver.

Therefore, in order to transmit a short message of the same content to a plurality of receivers by an originator, the same content has to be inputted whenever a message is transmitted to each receiver, or repeatedly a stored message has to be called back by a key adjustment and a receiver's phone number has to be inputted .

So as to solve said problem, in a short message transmitting method in a mobile communication terminal according to the related art, a broadcast message function for simultaneously transmitting a text message to a plurality of receivers is included.

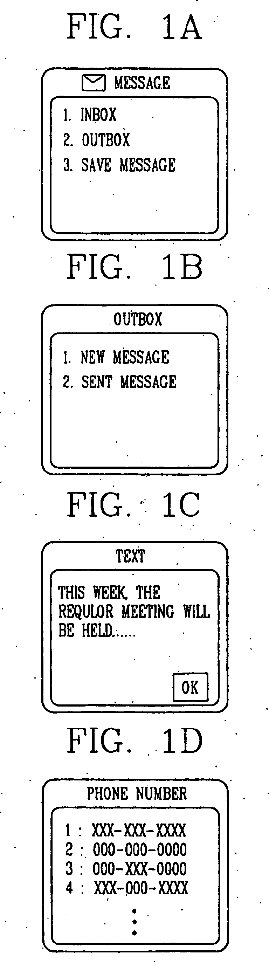

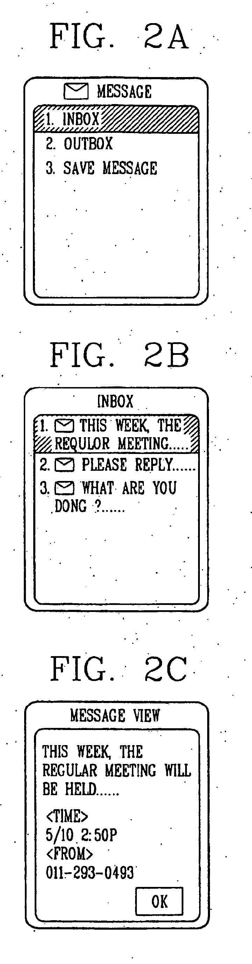

Figures 1A, 1B, 1C, and 1D are exemplary views showing a broadcast message transmitting method in a mobile communication terminal in accordance with the related art, and Figures 2A, 2B, and 2C are exemplary views showing a broadcast message receiving method in a mobile communication terminal in accordance with the related art.

As shown in Figure 1A, a user enters a message menu of a mobile communication terminal by a key adjustment, and selects an outbox item in the message menu. According to this, as shown in Figure 1B, predetermined sub items are displayed. Then, the user selects a new message item among the sub items. If the user selects the new message item, an input window for inputting a message content to be transmitted to a plurality of receivers is displayed as shown in Figure 1C and thereby the user inputs a message content by a key adjustment. If the user finishes the message input and presses a OK key, a phone number window for inputting each receiver's phone number to which the broadcast message will be transmitted is displayed as shown in Figure 1D. According to this, the user inputs each receiver's phone number and then transmits the message. At this time, the broadcast message is sequentially transmitted to each receiver's phone number.

When a mobile communication terminal receives the broadcast message which has been transmitted by said process, a user enters the message menu and then selects an inbox item among sub items as shown in Figure 2A.

If the inbox item is selected, a list of received messages is displayed as shown in Figure 2B. In the list, a message which has been received the most recently is selected and a content of the message is certified as shown in Figure 2C. Herein, the message is displayed not only with a content but also with an transmitter's phone number and an transmitted time.

However, in the broadcast message service method in a mobile communication terminal according to the related art, it is impossible for a receiver to know whether a received message is a broadcast message or not.

Also, in the broadcast message service method in a mobile communication terminal according to the related art, it is impossible for a receiver to know other receivers' phone numbers to which the same broadcast message has been transmitted.

US 2002/0143995 A1 may be construed to disclose a method of sending an SMS message via e-mail to a mobile phone. The method may comprise a transmission process in a personal computer for inputting an e-mail and a phone number of the receiving end mobile phone, transmitting the e-mail to the receiver, and a reception process for receiving the e-mail, as a short message, and thus certifying the message content and the receiver's phone number.

WO 0149050 discloses a broadcast short message service in an office wireless communication system using a keyboard to selectively input short messages with instructions for delivery to selected mobile communication units.

### SUMMARY OF THE INVENTION

Therefore, an object of the present invention is to provide a broadcast message service method in a mobile communication terminal, in which an open option for each receiver's phone number is set and each receiver can certify the opened phone numbers.

Another object of the present invention is to provide a broadcast message service method in a mobile communication terminal, in which a receiver can arbitrarily store or edit opened phone numbers at the time of receiving a broadcast message.

There is provided a broadcast message service method according to claim 1. Developments are set forth in the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figures 1A, 1B, 1C, and 1D are exemplary views showing a broadcast message transmitting method in a mobile communication terminal In accordance with the related art;
Figures 2A, 2B, and 2C are exemplary views showing a broadcast message receiving method in a mobile communication terminal in accordance with the related art;
Figure 3 is a flow chart showing a broadcast message transmitting method in a mobile communication terminal according to the present invention;
Figures 4A and 4B are exemplary views showing one embodiment of a broadcast message transmitting process in a mobile communication terminal according to the present invention;
Figure 5 is a flow chart showing a broadcast message receiving process in a mobile communication terminal according to the present invention; and
Figures 6A, 6B, and 6C are exemplary views showing a broadcast message receiving process in a mobile communication terminal according to the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, a broadcast message service method according to the present invention will be explained as follows.

The broadcast message service method according to the present invention comprises: a transmitter's writing a broadcast message, selecting receivers' phone numbers, setting an open option for each phone number, and thus transmitting the broadcast message; and receiving the broadcast message and thus certifying the message content and the opened phone numbers.

At this time, a receiver can perform a reply for the opened phone numbers or can store each phone number in a mobile communication terminal.

In said transmitting process, a data frame including a text message and a list of the opened phone numbers has to be transmitted. However, in the mobile communication system according to the related art, an amount of text messages and a data amount of phone numbers which can be used as a call back number are limited. Therefore, in order to apply the broadcast message service method in a mobile communication terminal according to the present invention, a new data frame for transmitting the list of the opened phone numbers has to be added to the mobile communication system according to the related art.

That is, two data frames, a data frame including the message content and the transmitter's phone number as the message according to the related art, and a data frame for transmitting the opened phone numbers are required. Herein, the data frame for transmitting the opened phone numbers uses a margin field among fields for transmitting the text message.

If a broadcast message according to the present invention is received by using a mobile communication terminal according to the related art, opened receiver's phone numbers can not be certified even though the text message content and the transmitter's phone number can be certified.

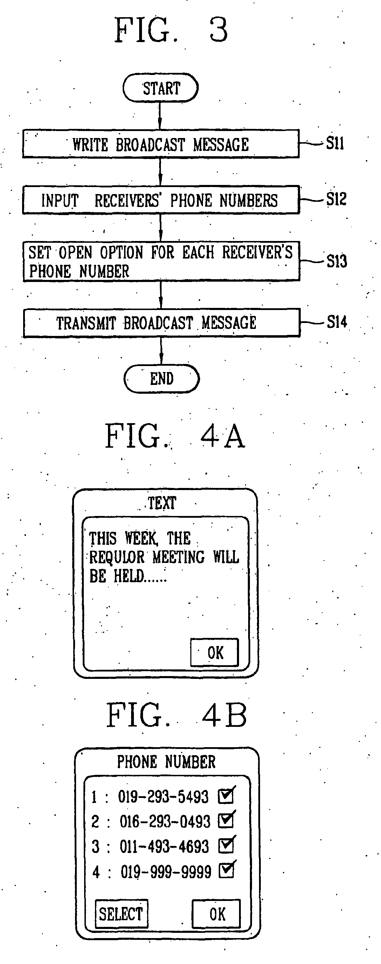

Figure 3 is a flow chart showing a broadcast message transmitting method in mobile communication terminal according to the present invention.

As shown, a user writes a broadcast message to be transmitted by a key adjustment (S11), and inputs receivers' phone numbers (S12). Then, an open option for each inputted receiver's phone number is set (S13), and transmits a data frame composed of the broadcast message content, the transmitter's phone number, and the opened receivers' phone numbers (S14).

Figures 4A and 4B are exemplary views showing one embodiment of a broadcast message transmitting process in a mobile communication terminal according to the present invention.

Referring to Figures 4A and 4B, operation of the present invention will be explained in more detail.

First, a user enters a predetermined menu, that is, a message menu by a key adjustment of a mobile communication terminal, and then selects an outbox item among sub items.

If the user selects a new message item among sub items constituting the outbox item, a message input window is displayed as shown in Figure 4A. According to this, the user inputs a text message content to be transmitted.

When the user presses a certification key after inputting the text message, a phone number input window for inputting receivers' phone numbers to which the text message will be transmitted is displayed as shown in Figure 4B. According to this, the user inputs receivers' phone numbers, and sets an open option for each inputted phone number.

At this time, if the number of inputted receivers' phone numbers is 10 and the number of opened receivers' phone numbers is 5, a mobile communication terminal which has received said broadcast message displays only said five opened receivers' phone numbers.

When a setting of the broadcast message content, the receivers' phone numbers, and the open option for each receiver's phone number is completed, a data frame including the message content and the transmitter's phone number and a data frame including the opened receivers' phone numbers are transmitted.

Herein, even if the opened receiver's phone numbers do not exist, a data frame including a header for a broadcast transmission is transmitted. That is, even though the opened receiver's phone numbers do not exist at the time of transmitting the broadcast message, a data frame allocated to transmit the opened receiver's phone numbers is always transmitted.

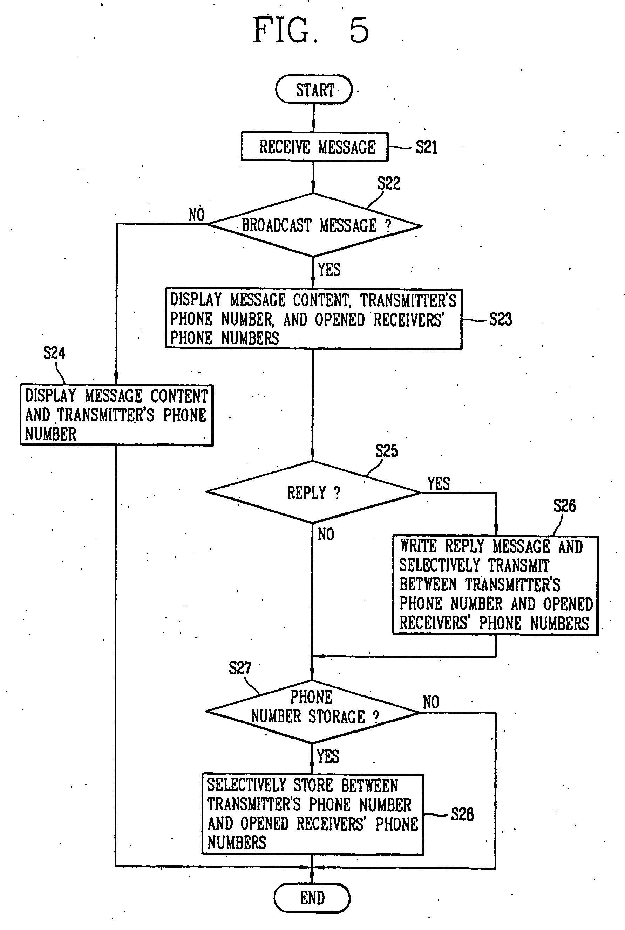

Figure 5 is a flow chart showing a broadcast message receiving process in a mobile communication terminal according to the present invention.

If the mobile communication terminal receives a message (S21), it is certified whether the message is a broadcast message or not (S22).

If the message is a broadcast message, the message content, the transmitter's phone number, and the opened receivers' phone numbers are displayed on a display unit of the mobile communication terminal (S23). On the contrary, if the message is a general short message not a broadcast message, the message content and the transmitter's phone number are displayed on the display unit (S24).

The user certifies a content of the broadcast message and determines whether to perform a reply for the corresponding message or not (S25). If the user determines to perform the reply, a message is written and a phone number to which a reply message will be transmitted is selected between the transmitter's phone number of the broadcast message and the opened receivers' phone numbers (S26).

After completing the reply for the broadcast message, the user judges whether to store the transmitter's phone number and the opened receivers' phone numbers or not (S27) and thereby selectively stores the transmitter's phone number and the opened receivers' phone numbers (S28).

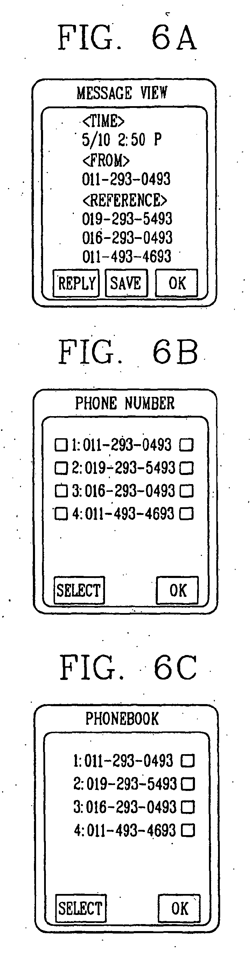

Figures 6A, 6B, and 6C are exemplary views showing a broadcast message receiving process in a mobile communication terminal according to the present invention.

Referring to Figures 6A to 6C, operation of the present invention will be explained in more detail.

When a message is received at a mobile communication terminal, it is judged whether the message is a general short message or a broadcast message. Herein, a kind of the received message can be judged by the number of received data frames or information included in a header of the data frame.

If the received message is a general short message, a content of the message and the transmitter's phone number are detected thus to be displayed on the display unit of the mobile communication terminal.

However, if the received message is a broadcast message, a content of the message, the transmitter's phone number, and the opened receivers' phone numbers are detected thus to be displayed on the display unit of the mobile communication terminal as shown in Figure 6A. At this time, if the opened receivers' phone numbers do not exist, a preset sentence such as 'There is no opened receiver's phone number' is displayed thereby to inform the user that the received message is a broadcast message.

The opened receivers' phone numbers can be displayed at a mobile communication terminal to which the broadcast message service method according to the present invention is applied, but can not be displayed at a mobile communication terminal according to the related art to which the present invention has not been applied.

If the user certifies the broadcast message and inputs a reply command by pressing a predetermined key in order to reply for the received message, as shown in Figure 6B, the transmitter's phone number and a list for the opened receivers' phone numbers are displayed.

The user selects phone numbers to which a reply for the broadcast message will be transmitted from the phone number list, and inputs a reply message content thus to transmit. At this time, if the reply message is a broadcast message, the user can set an open option for the selected phone numbers.

A predetermined phone number included in the list can be stored in a phone directory mounted in the mobile communication terminal by pressing a preset storage key. That is, if a preset storage key is pressed under a state that the broadcast message has been displayed on the display unit of the mobile communication terminal, as shown in Figure 6C, the transmitter's phone number of the broadcast message and the list for the opened receivers' phone numbers are outputted. At this time, if the list includes a phone number identical to a phone number which has been registered in the phone directory of the mobile communication terminal, the corresponding phone number is displayed as information which has been registered in the mobile communication terminal.

If the user selects phone numbers to be stored from the list and inputs an OK key, the selected phone numbers are registered in the phone directory of the mobile communication terminal. Herein, when the user presses the OK key, a phone number registration window is displayed on the display unit. If the user inputs a name or predetermined information to the phone number registration window and presses the OK key, the corresponding phone number is stored.

As aforementioned, in the broadcast message service method in a mobile communication terminal according to the present invention, a content of the broadcast message, the transmitter's information, and the opened receivers' phone numbers are displayed at the time of receiving the broadcast message. According to this, other receivers' phone numbers to which the same broadcast message has been transmitted can be certified.

Also, in the broadcast message service method in a mobile communication terminal according to the present invention, the transmitter's phone number and the opened receivers' phone numbers for the broadcast message can be stored or edited by a receiver's arbitrary handling, and the receiver can selectively transmit a reply message, thereby increasing the user's convenience.

As the present invention may be embodied in several forms without departing from the essential characteristics thereof, it should also be understood that the above-described embodiments are to be construed broadly within the scope as defined in the appended claims.

## Claims

1. A broadcast message service method for use in a mobile communication terminal, the method comprising:
a transmission process (S11 to S14) for inputting (S11, S12) a broadcast message and receivers' phone numbers, setting (S13) an open option for each receiver's phone number such that only opened receiver's phone numbers are displayed upon later reception of the broadcast message¹, and transmitting (S14) the broadcast message to the receivers²; and
a reception process (S21 to S28) for receiving (S21) the broadcast message and thus certifying (S23 to S26) the message content and the opened receivers' phone numbers by:
detecting (S22) the received broadcast message content, the transmitter's phone number, and the opened receivers' phone numbers; and
displaying (S23) the detected contents on a display unit of the mobile communication terminal.

2. The method of claim 1, wherein the broadcast message includes:
a data frame including the message content and the transmitter's phone number;
and
a data frame including the opened phone numbers.

3. The method of claim 1, wherein the reception process further comprises:
selectively replying (S26) to the opened receivers' phone numbers; and
selectively storing (S28) the opened receivers' phone numbers.

4. The method of claim 1, wherein the transmission process further comprises:
inputting (S11, S12) a message content and receivers' phone numbers;
inputting (S13) an open option for each receiver's phone number; and
transmitting (S14) the message to each receiver.

5. The method of claim 2, wherein the data frame including the opened phone numbers uses a margin field among fields for transmitting the message.

6. The method of claim 1, wherein the reception process further comprises:
judging (S22) whether a received message is a broadcast message or not;
if the received message is a broadcast message, detecting (S22) opened receivers' phone numbers; and
displaying (S23) the detected contents on a display unit of the mobile communication terminal.

7. The method of claim 6, further comprising performing (S26) a reply for the broadcast message.

8. The method of claim 7, wherein the reply for the broadcast message is performed by selectively designating phone numbers from the transmitter's phone number and a list for the opened receivers' phone numbers.

9. The method of claim 8, wherein the reply is transmitted by setting an open option for each selected phone number.

10. The method of claim 6, further comprising storing (S28) phone numbers selected from the transmitter's phone number and a list for the opened receivers' phone numbers.

11. The method of claim 6, wherein the step of judging a broadcast message is performed by using the number of data frames included in a message or information included in a header of the data frame.

12. The method of claim 1, wherein the reception process further comprises:
judging (S22) whether a received message is a broadcast message or not;
if the received message is a broadcast message, displaying (S23) a message content,
a transmitter's phone number, and opened receivers' phone numbers on a display unit;
selectively performing (S26) a reply for the received message; and
storing (S28) phone numbers selected from the transmitter's phone number and a list for the opened receivers' phone numbers.

13. The method of claim 12, wherein the reply process comprises:
writing (S11) a message content for the reply;
selecting (S12) phone numbers to be transmitted from the transmitter's phone number and the list for the opened receivers' phone numbers of the received message;
setting (S13) an open option for the selected phone number; and
transmitting (S14) the reply message.

14. The method of claim 12, wherein, if the transmitter's phone number and the opened receivers' phone numbers are phone numbers which have been stored in the mobile communication terminal, the phone numbers are displayed as pre-stored information.

## Patentansprüche

1. Verfahren für einen Rundfunk-Nachrichtendienst zur Verwendung in einem mobilen Kommunikations-Endgerät, wobei das Verfahren umfasst:
einen Übertragungsvorgang (S11 bis S14) zum Eingeben (S11, S12) einer Rundfunknachricht und von Empfänger-Telefonnummern, Einstellen (S13) einer Offen-Option für jede Empfänger-Telefonnummer derart, dass nur geöffnete Empfänger-Telefonnummern bei einem späteren Empfang der Rundfunknachricht angezeigt werden, und Übertragen (S14) der Rundfunknachricht zu den Empfängern; und
einen Empfangsvorgang (S21 bis S28) zum Empfangen (S21) der Rundfunknachricht und damit zum Bestätigen (S23 bis 526) des Nachrichteninhalts und der geöffneten Empfänger-Telefonnummern durch:
Erfassen (522) des empfangenen Rundfunknachrichten-Inhalts, der Sender-Telefonnummer und der geöffneten Empfänger-Telefonnummern; und
Anzeigen (523) der erfassten Inhalte an einer Anzeigeeinheit des mobilen Kommunikations-Endgeräts.

2. Verfahren nach Anspruch 1, wobei die Rundfunknachricht enthält:
einen Datenframe mit dem Nachrichteninhalt und der Sender-Telefonnummer; und
einen Datenframe mit den geöffneten Telefonnummern.

3. Verfahren nach Anspruch 1, wobei der Empfangsvorgang ferner umfasst:
selektives Antworten (526) auf die geöffneten Empfänger-Telefonnummern; und
selektives Speichern (528) der geöffneten Empfänger-Telefonnummern.

4. Verfahren nach Anspruch 1, wobei der Übertragungsvorgang ferner umfasst:
Eingeben (S11, S12) eines Nachrichteninhalts und von Empfänger-Telefonnummern;
Eingeben (S13) einer Offen-Option für jede Empfänger-Telefonnummer; und
Übertragen (S14) der Nachricht an jeden Empfänger.

5. Verfahren nach Anspruch 2, wobei der Datenframe mit den geöffneten Telefonnummern ein Margenfeld unter Feldern zum Übertragen der Nachricht verwendet.

6. Verfahren nach Anspruch 1, wobei der Empfangsvorgang ferner umfasst:
Beurteilen (S22), ob eine empfangene Nachricht eine Rundfunknachricht ist oder nicht;
falls die empfangene Nachricht eine Rundfunknachricht ist, Erfassen (S22) geöffneter Empfänger-Telefonnummern; und
Anzeigen (S23) der erfassten Inhalte an einer Anzeigeeinheit des mobilen Kommunikations-Endgeräts.

7. Verfahren nach Anspruch 6, ferner umfassend das Durchführen (S26) einer Antwort auf die Rundfunknachricht.

8. Verfahren nach Anspruch 7, wobei die Antwort auf die Rundfunknachricht durchgeführt wird, indem Telefonnummern von der Sender-Telefonnummer und einer Liste für die geöffneten Empfänger-Telefonnummern selektiv bezeichnet werden.

9. Verfahren nach Anspruch 8, wobei die Antwort übertragen wird, indem eine Offen-Option für jede ausgewählte Telefonnummer eingestellt wird.

10. Verfahren nach Anspruch 6, ferner umfassend das Speichern (S28) von Telefonnummern, die von der Sender-Telefonnummer und einer Liste für die geöffneten Empfänger-Telefonnummern ausgewählt sind.

11. Verfahren nach Anspruch 6, wobei der Schritt des Beurteilens einer Rundfunknachricht durchgeführt wird, indem die Anzahl von in einer Nachricht enthaltenen Datenframes oder in einem Header des Datenframes enthaltene Information verwendet wird.

12. Verfahren nach Anspruch 1, wobei der Empfangsvorgang ferner umfasst:
Beurteilen (S22), ob eine empfangene Nachricht eine Rundfunknachricht ist oder nicht;
falls die empfangene Nachricht eine Rundfunknachricht ist, Anzeigen (S23) eines Nachrichteninhalts, einer Sender-Telefonnummer und geöffneter Empfänger-Telefonnummern an einer Anzeigeeinheit;
selektives Durchführen (S26) einer Antwort auf die empfange Nachricht; und
Speichern (S28) von Telefonnummern, die von einer Sender-Telefonnummer und einer Liste für die geöffneten Empfänger-Telefonnummern ausgewählt sind.

13. Verfahren nach Anspruch 12, wobei der Antwortvorgang umfasst:
Schreiben (S11) eines Nachrichteninhalts für die Antwort;
Auswählen (S12) von Telefonnummern, die von der Sender-Telefonnummer und der Liste für die geöffneten Empfänger-Telefonnummern der empfangenen Nachricht zu übertragen sind;
Einstellen (S13) einer Offen-Option für die ausgewählte Telefonnummer; und
Übertragen (S14) der Antwort-Nachricht.

14. Verfahren nach Anspruch 12, wobei, falls die Sender-Telefonnummer und die geöffneten Empfänger-Telefonnummern Telefonnummern sind, die in dem mobilen Kommunikations-Endgerät gespeichert worden sind, die Telefonnummern als vorgespeicherte Information angezeigt werden.

## Revendications

1. Procédé de service de message de diffusion destiné à une utilisation dans un terminal de communication mobile, le procédé comprenant :
un processus de transmission (S11 à S14) pour entrer (S11, S12) un message de diffusion et des numéros de téléphone de destinataires, fixer (S13) une option ouverte pour chaque numéro de téléphone de destinataire de manière à ce que seuls des numéros de téléphone ouverts de destinataires soient affichés à réception ultérieure du message de diffusion, et transmettre (S14) le message de diffusion aux destinataires ; et
un processus de réception (S21 à S28) pour recevoir (S21) le message de diffusion et ainsi certifier (S23 à S26) le contenu du message et les numéros de téléphone ouverts de destinataires par :
détection (S22) du contenu du message de diffusion reçu, du numéro de téléphone de l'émetteur, et des numéros de téléphone ouverts de destinataires ; et
affichage (S23) des contenus détectés sur une unité d'affichage du terminal de communication mobile.

2. Procédé selon la revendication 1, dans lequel le message de diffusion inclut :
une trame de données incluant le contenu du message et le numéro de téléphone de l'émetteur ; et
une trame de données incluant les numéros de téléphone ouverts.

3. Procédé selon la revendication 1, dans lequel le processus de réception comprend en outre :
la réponse sélective (S26) aux numéros de téléphone ouverts de destinataires ; et
le stockage sélectif (S28) des numéros de téléphone ouverts de destinataires.

4. Procédé selon la revendication 1, dans lequel le processus de transmission comprend en outre :
l'entrée (S11, S12) d'un contenu de message et de numéros de téléphone de destinataires ;
l'entrée (S13) d'une option ouverte pour chaque numéro de téléphone de destinataire ; et
la transmission (S14) du message à chaque destinataire.

5. Procédé selon la revendication 2, dans lequel la trame de données incluant les numéros de téléphone ouverts utilise un champ de marge parmi des champs pour transmettre le message.

6. Procédé selon la revendication 1, dans lequel le processus de réception comprend en outre :
le jugement (S22) si un message reçu est un message de diffusion ou non ;
si le message reçu est un message de diffusion, la détection (S22) de numéros de téléphone ouverts de destinataires ; et
l'affichage (S23) des contenus détectés sur une unité d'affichage du terminal de communication mobile.

7. Procédé selon la revendication 6, comprenant en outre l'exécution (526) d'une réponse pour le message de diffusion.

8. Procédé selon la revendication 7, dans lequel la réponse pour le message de diffusion est exécutée par désignation sélective de numéros de téléphone parmi le numéro de téléphone de l'émetteur et une liste pour les numéros de téléphone ouverts de destinataires.

9. Procédé selon la revendication 8, dans lequel la réponse est transmise en fixant une option ouverte pour chaque numéro de téléphone sélectionné.

10. Procédé selon la revendication 6, comprenant en outre le stockage (S28) de numéros de téléphone choisis parmi le numéro de téléphone de l'émetteur et une liste pour les numéros de téléphone ouverts de destinataires.

11. Procédé selon la revendication 6, dans lequel l'étape de jugement d'un message de diffusion est exécutée en utilisant le nombre de trames de données incluses dans un message ou une information incluse dans un en-tête de la trame de données.

12. Procédé selon la revendication 1, dans lequel le processus de réception comprend en outre :
le jugement (S22) si un message reçu est un message de diffusion ou non ;
si le message reçu est un message de diffusion, l'affichage (S23) d'un contenu de message, d'un numéro de téléphone de l'émetteur, et de numéros de téléphone ouverts de destinataires sur une unité d'affichage ;
l'exécution sélective (S26) d'une réponse pour le message reçu ; et
le stockage (S28) de numéros de téléphone choisis parmi le numéro de téléphone de l'émetteur et une liste pour les numéros de téléphone ouverts de destinataires.

13. Procédé selon la revendication 12, dans lequel le processus de réponse comprend :
l'écriture (S11) d'un contenu de message pour la réponse ;
la sélection (S12) de numéros de téléphone devant être transmis parmi le numéro de téléphone de l'émetteur et la liste pour les numéros de téléphone ouverts de destinataires du message reçu ;
la fixation (S13) d'une option ouverte pour le numéro de téléphone sélectionné ; et
la transmission (S14) du message de réponse.

14. Procédé selon la revendication 12, dans lequel, si le numéro de téléphone de l'émetteur et les numéros de téléphone ouverts de destinataires sont des numéros de téléphone qui ont été stockés dans le terminal de communication mobile, les numéros de téléphone sont affichés comme une information pré-stockée.
